# EUROPEAN PATENT SPECIFICATION

(11) **EP 3 642 850 B1**
(45) Date of publication and mention of the grant of the patent: **06.05.2026**
(21) Application number: 18820544.7
(22) Date of filing: 05.06.2018
(51) Int. Cl.: G21C 19/19, G21C 19/20, G21C 19/14, G21C 1/20, G21C 3/33, G21C 19/02, G21C 5/06, G21D 1/00, G21F 5/005, G21F 9/36, B23D 21/00, G21C 19/34, G21C 19/36, G21C 19/375, G21F 9/28, B02C 18/14

(54) **SYSTEM AND METHOD FOR VOLUME REDUCTION OF NUCLEAR REACTOR COMPONENTS**
SYSTEM UND VERFAHREN ZUR VOLUMENREDUKTION VON KERNREAKTORKOMPONENTEN
SYSTÈME ET PROCÉDÉ DE RÉDUCTION DE VOLUME DANS DES ÉLÉMENTS DE RÉACTEUR NUCLÉAIRE

(30) Priority: 23.06.2017 US 201762524098 P; 28.02.2018 RO 201800140
(43) Date of publication of application: 29.04.2020
(73) Proprietor: Candu Energy Inc., Mississauga, Ontario L5K 1B2 (CA)
(72) Inventor: DEADMAN, Jason, Georgetown, Ontario L7G 4S4 (CA)
(74) Representative: J A Kemp LLP
(86) International application number: PCT/CA2018/050671
(87) International publication number: WO 2018/232497

(56) References cited:
- WO-A1-2007/083401
- WO-A1-2015/197528
- CA-A1- 2 766 459
- CA-A1- 2 766 459
- CA-A1- 2 766 472
- CA-A1- 2 766 583
- JP-A- 2004 361 113
- JP-A- 2005 161 277
- US-B1- 6 523 466

## Description

### CROSS-REFERENCE TO RELATED APPLICATIONS

This application claims all benefit including priority to United States Provisional Patent Application 62/524,098, entitled "SYSTEM AND METHOD FOR VOLUME REDUCTION OF NUCLEAR REACTOR COMPONENTS", and filed June 23, 2017; and Romanian Patent Application a 2018 00140 , filed February 28, 2018.

### FIELD OF THE INVENTION

Embodiments described herein relate to volume reduction systems for processing nuclear reactor components.

### BACKGROUND

A nuclear reactor has a limited life of operation. For example, second generation CANDU^{™}-type reactors ("CANada Deuterium Uranium") are designed to operate for approximately 25 to 30 years. After this time, the existing fuel channels can be removed and new fuel channels can be installed. Performing this "retubing" process can extend the life of a reactor significantly, as an alternative to decommissioning the reactor. Nuclear reactor retubing processes include removal of a large number of reactor components and include various other activities, such as shutting down the reactor, preparing the vault, and installing material handling equipment and various platforms and equipment supports. The removal process can also include removing closure plugs and positioning hardware assemblies, disconnecting feeder assemblies, severing bellows, and removing end fittings.

The removal process can also include the removal and disposal of highly radioactive pressure tubes and calandria tubes from the reactor core. Removal and/or disposal of these tubes, as well as other components of the nuclear reactor, may take considerable time and effort.

After the removal process is complete, an inspection and installation process is typically performed. For example, tube sheets positioned at each end of the reactor may include a plurality of bores. Each of the plurality of bores supports a fuel channel assembly that spans between the tube sheets. When a fuel channel assembly is removed, each tube sheet bore is inspected to ensure that the removal of the fuel channel assembly has not damaged the tube sheet bore and that the tube sheet bore is ready for insertion of a new fuel channel assembly.

After the tube sheets are confirmed to be in suitable condition, calandria tubes, pressure tubes, end fittings, and other components can be installed back into the bores. For each fuel channel assembly, part of this process involves rolling the end of the calandria tube to the tube sheet of the calandria (e.g., using a deformable calandria insert), inserting an end fitting body into the bore, rolling the end of the pressure tube into the end fitting body, and inserting an end fitting liner into the end fitting.
JP 2004 361113 A discloses a disassembly method for pressure tube of advanced thermal reactor. CA 2 766 459 A1 discloses calandria tube, pressure tube, and annulus spacers removal apparatus and method for nuclear reactor retubing. WO 2007/083401 A1 discloses a method for dismantling heat exchanger installed in building for nuclear reactor. WO 2015/197528 A1 discloses an installation and method for fragmenting at least one tube, preferably a radiologically contaminated tube. US 6 523 466 B1 discloses a checkerboard shear volume reduction system. JP 2005 161277 A discloses crushing apparatus and a method of crushing by crushing apparatus.

### SUMMARY

The invention is defined in the independent claims. Further aspects and preferred embodiments are defined in the dependent claims. Any aspects, embodiments and examples of the present disclosure which do not fall under the scope of the appended claims do not form part of the invention and are merely provided for illustrative purposes. In some embodiments, a volume reduction system for nuclear reactor components is provided. The system includes a feed unit to receive a radioactive tube from a nuclear reactor, and a segmenting unit to receive the tube from the feed unit. The segmenting unit includes a cutting element that segments the tube into segmented pieces. The system also includes a shredder unit to receive segmented pieces of the tube and shred the segmented pieces.

Some embodiments provide a method for reducing the volume of a nuclear reactor component, including removing the component from the nuclear reactor, moving the component with a feed unit to a segmenting unit, cutting and segmenting the component into segmented pieces with a cutting element in the segmenting unit, and shredding the segmented pieces with a shredding unit.

In some embodiments, a method for reducing the volume of nuclear reactor tubes is provided, and comprises removing two tubes from the nuclear reactor, where one of the tubes is disposed within the other tube. The method also includes moving the two tubes with a feed unit to a segmenting unit, cutting and segmenting the two tubes simultaneously into segmented pieces with a cutting element in the segmenting unit, and shredding the segmented pieces with a shredding unit.

In some embodiments, a volume reduction system for a nuclear reactor is provided. The system includes a feed unit to receive a radioactive tube from a nuclear reactor, and a shredder unit to receive the radioactive tube from the feed unit and shred the radioactive tube.

In some embodiments, a method for reducing the volume of a nuclear reactor tube is provided, and comprises removing a radioactive nuclear reactor tube from a nuclear reactor and shredding the nuclear reactor tube with a shredding unit.

Other aspects of the invention will become apparent by consideration of the detailed description and accompanying drawings.

### BRIEF DESCRIPTION OF THE DRAWINGS

FIG. 1 is a perspective view of a CANDU^{™}-type reactor.
FIG. 2 is a cutaway view of a nuclear reactor fuel channel assembly of the reactor of FIG. 1.
FIG. 3 is a perspective view of an annulus spacer installed between a pressure tube and a calandria tube in the fuel channel assembly of FIG. 2.
FIGS. 4 and 5 are schematic views of an on-face volume reduction system according to one embodiment, for reducing the volume of the pressure tube and/or the calandria tube of FIG. 3.
FIGS. 6-8 are schematic views of an in-reactor vault volume reduction system according to one embodiment, for reducing the volume of the pressure tube and/or the calandria tube of FIG. 3.
FIGS. 9-14 are schematic views of an in-reactor vault volume reduction system according to an embodiment, which is not part of the present invention, for reducing the volume of the pressure tube and/or the calandria tube of FIG. 3.

### DETAILED DESCRIPTION

Before embodiments of the invention are explained in detail, it is to be understood that the invention is not limited in its application to the details of construction and the arrangement of components set forth in the following description or illustrated in the accompanying drawings. The invention is capable of other embodiments and of being practiced or of being carried out in various ways. The invention is defined in the appended claims.

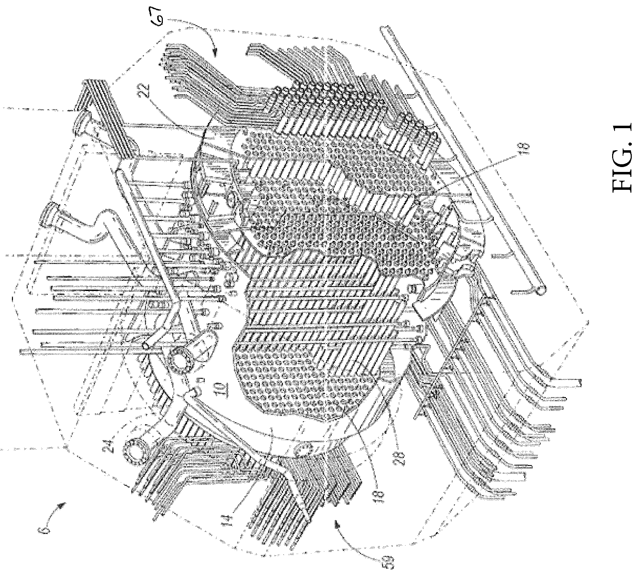

FIG. 1 is a perspective of a reactor core of a CANDU^{™}-type reactor 6. The reactor core is typically contained within a vault that is sealed with an air lock for radiation control and shielding. Although aspects of the invention are described with particular reference to the CANDU^{™}-type reactor 6 for convenience, the invention is not limited to CANDU^{™}-type reactors, and may be useful outside this particular field as well. Returning to FIG. 1, a generally cylindrical vessel, known as the calandria 10 of the CANDU^{™}-type reactor 6, contains a heavy-water moderator. The calandria 10 has an annular shell 14 and a tube sheet 18 at a first end 22 and a second end 24. The tube sheets 18 include a plurality of apertures (referred to herein as "bores") that each accept a fuel channel assembly 28. As shown in FIG. 1, a number of fuel channel assemblies 28 pass through the tube sheets 18 of the calandria 10 from the first end 22 to the second end 24.

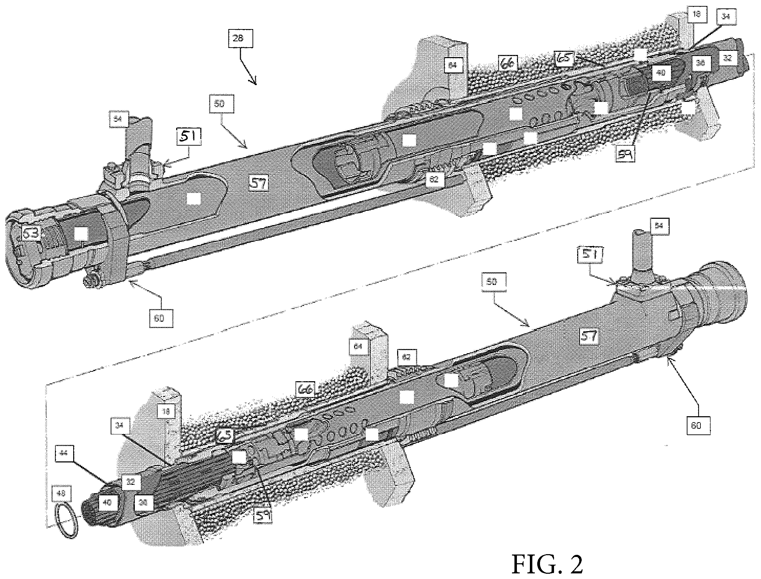

As in the illustrated embodiment, in some embodiments the reactor core is provided with two walls at each end 22, 24 of the reactor core: an inner wall defined by the tube sheet 18 at each end 22, 24 of the reactor core, and an outer wall 64 (often referred to as a "end shield" and illustrated in FIG. 2) located a distance outboard from the tube sheet 18 at each end 22, 24 of the reactor core. A lattice tube 65 spans the distance between the tube sheet 18 and the end shield 64 at each pair of bores (i.e., in the tube sheet 18 and the end shield 64, respectively).

FIG. 2 is a cutaway view of one fuel channel assembly 28 of the reactor core illustrated in FIG. 1. As illustrated in FIG. 2, each fuel channel assembly 28 includes a calandria tube ("CT") 32 surrounding other components of the fuel channel assembly 28. The CTs 32 each span the distance between the tube sheets 18. Also, the opposite ends of each CT 32 are received within and sealed to respective bores in the tube sheets 18. In some embodiments, a CT rolled joint insert 34 is used to secure the CT 32 to the tube sheet 18 within the bores. A pressure tube ("PT") 36 forms an inner wall of the fuel channel assembly 28. The PT 36 provides a
conduit for reactor coolant and fuel bundles or assemblies 40. The PT 36, for example, generally holds two or more fuel assemblies 40, and acts as a conduit for reactor coolant that passes through each fuel assembly 40. An annulus space 44 is defined by a gap between each PT 36 and its corresponding CT 32. The annulus space 44 is normally filled with a circulating gas, such as dry carbon dioxide, helium, nitrogen, air, or mixtures thereof. One or more annulus spacers 48 are disposed between the CT 32 and the PT 36. The annulus spacers 48 maintain the gap between the PT 36 and the corresponding CT 32, while allowing passage of annulus gas through and around the annulus spacers 48.

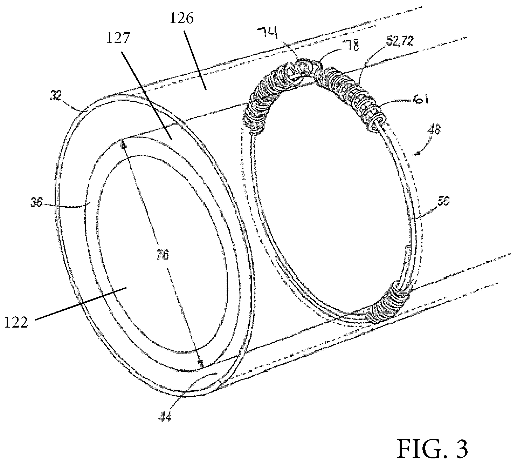

FIG. 3 illustrates an embodiment of the annulus spacer 48 installed within the annulus space 44 between the CT 32 and the PT 36. The annulus spacer 48 includes a garter spring 52 and a girdle wire 56. The exemplary garter spring 52 is formed from a length of coiled wire 61. Two ends 74 and 78 of the coiled wire 61 are connected so that the garter spring 52 forms a toroid 72. The garter spring 52 can be dimensioned to fit tightly around the PT 36, and to be both resilient so that it may be expanded to a dimension greater than an outside diameter 76 of the PT 36 during installation, yet to fit tightly and securely once positioned. In the illustrated embodiment, the garter spring 52 is formed from a nickel-chromium based alloy such as INCONEL X-750. In other embodiments, the garter spring 52 may be formed of other alloys, including a zirconium-based alloy such as ZIRCALOY or a zirconium-niobium-copper alloy. In still other embodiments, the garter spring 52 may be formed of an alloy including, but not limited to, a combination of zirconium, niobium, and copper.

With reference again to FIG. 2, each end of each fuel channel assembly 28 is provided with an end fitting assembly 50 located outside of the corresponding tube sheet 18. Each end fitting assembly 50 includes an end fitting body 57 and an end fitting liner 59. At the terminal end of each end fitting assembly 50 is a closure plug 53. Each end fitting assembly 50 also includes a feeder assembly 54. The feeder assemblies 54 feed reactor coolant into or remove reactor coolant from the PTs 36 via feeder tubes 67 (FIG. 1). In particular, for a single fuel channel assembly 28, the feeder assembly 54 on one end of the fuel channel assembly 28 acts as an inlet feeder, and the feeder assembly 54 on the opposite end of the fuel channel assembly 28 acts as an outlet feeder. As shown in FIG. 2, the feeder assemblies 54 can be attached to the end fitting assemblies 50 using a coupling assembly 51 including a number of screws, washers, seals, and/or other types of connectors. The lattice tube 65 (described above) encases the connection between the end fitting assembly 50 and the PT 36 containing the fuel assemblies 40. Shielding ball bearings 66 and cooling water surround the exterior of the lattice tubes 65, which provides additional radiation shielding.

Returning to FIG. 2, a positioning hardware assembly 60 and bellows 62 are also coupled to each end fitting assembly 50. The bellows 62 allows the fuel channel assemblies 28 to move axially - a capability that can be important where fuel channel assemblies 28 experience changes in length over time, which is common in many reactors. The positioning hardware assemblies 60 can be used to set an end of a fuel channel assembly 28 in either a locked configuration that fixes the axial position, or an unlocked configuration. The positioning hardware assemblies 60 are also coupled to the end shield 64. The illustrated positioning hardware assemblies 60 each include a rod having an end that is received in a bore of the respective end shield 64. In some embodiments, the rod end and the bore in the end shield 64 are threaded. Again, it should be understood that although a CANDU^{™}-type reactor is illustrated in FIGS. 1-2, the invention may also apply to other types of reactors, including reactors having components that are similar to those illustrated in FIGS. 1-2.

As noted above, large scale fuel channel replacement is often necessary to extend the operating life of the nuclear reactor. Thus, some or all of the fuel channel assemblies 28 must be removed and replaced. One of the key processes of this replacement is the specific removal and disposal of the CTs 32 and/or the PTs 36 from the reactor core. The CTs 32 and the PTs 36 are highly radioactive. Removal and disposal processes therefore require safeguards and precautionary measures (e.g., often dictated by regulations) to ensure that the CTs 32 and the PTs 36 are disposed of safely. Ideally, however, it is beneficial to conduct the removal and disposal process as quickly and as efficiently as possible, while still satisfying all safety regulations. This is due to the high cost involved in shutting down a reactor to complete large scale fuel channel replacement. Also, waste storage costs are based on volume of waste being stored. Thus, minimizing the volume stored facilitates reduction of storage costs. Many of the same considerations also apply to reactor decommissioning, to which the present invention also applies.

One manner by which to increase the efficiency and timing of fuel channel assembly replacement and to reduce waste storage costs is to use a volume-reduction process to first reduce the volume of the CTs 32 and/or the PTs 36 before they are moved to a disposal site. Below is a description of three different volume reduction systems and methods.

### ON-FACE VOLUME REDUCTION

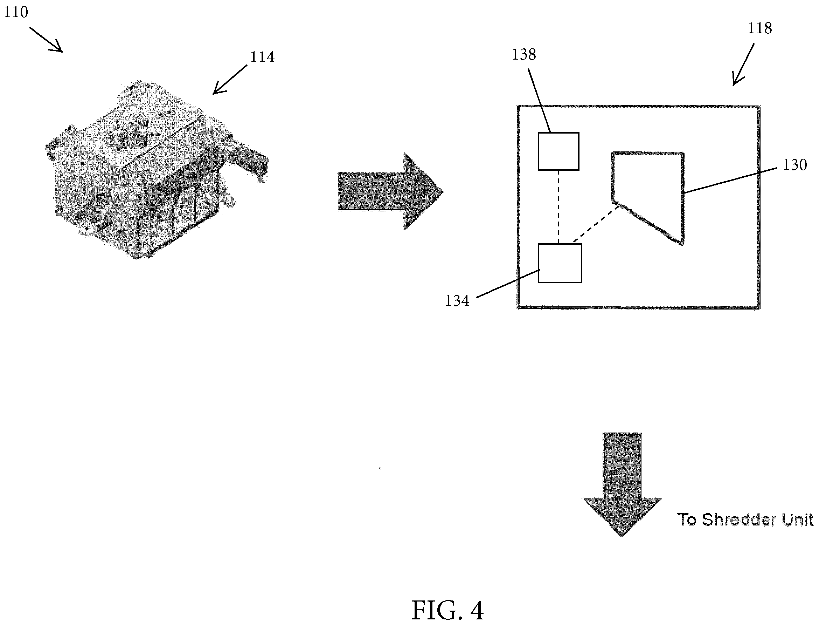

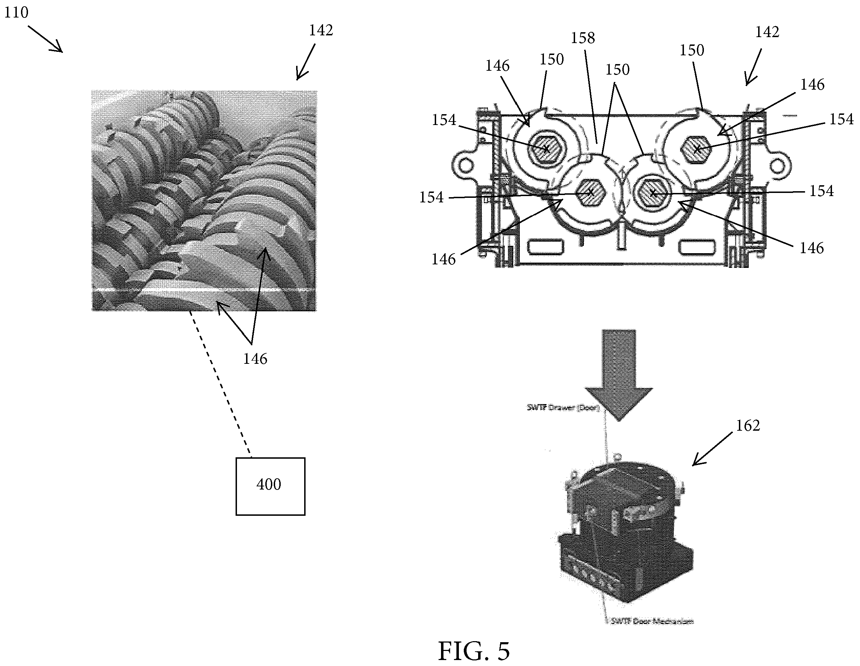

FIGS. 4 and 5 illustrate an on-face volume reduction system 110. The volume reduction system 110 is located adjacent a face of the reactor, and is used to reduce the volume of CTs 32 and/or PTs 36 on-site at the reactor.

The illustrated volume reduction system 110 includes a feed unit 114 (e.g., an already-existing feed unit on a CANDU^{™}-type reactor, or another feed unit). In some embodiments, the feed unit 114 is positioned on a work platform at the reactor face. In some embodiments, the feed unit 114 draws the CTs 32 and/or PTs 36 from the reactor core. Once the feed unit 114 has received the CTs and/or PTs 36, the feed unit 114 moves the CTs 32 and/or PTs 36 into a segmenting unit 118.

In some embodiments, the feed unit 114 includes a retraction unit assembly and/or a feeder assembly, similar to the retraction unit assembly 100 and the feeder assembly 300 described and illustrated in U.S. Patent No. 6,523,466. For example, the retraction unit assembly may include a retraction plug, a chain magazine, a drive motor, and a hydraulic hose reel. The chain magazine may include a chain that is powered in either direction by the drive motor. The chain may be a machine chain that can only flex in one direction, allowing it to be used under either tension or compression. The chain may be used to push or pull the CTs 32 and/or PTs 36. For example, the retraction plug may be mounted at an end of the chain, such that when the chain is extended by the drive motor, the retraction plug is advanced into an end of one of the CTs 32 and/or PTs 36. The retraction plug may include a nose sized and shaped to be received inside the end of the CT 32 and/or PT 36. The retraction plug may include a finger or fingers or other structures that grip an interior wall or walls of the CT 32 and/or PT 36, to thereby facilitate a push / pull movement of the CT 32 and/or PT 36.

With reference to FIG. 3, in some embodiments the retraction plug is advanced into the end of one of the PTs 36. Fingers on the retraction plug are extended radially outwardly to press against and grip an interior surface 122 of the PT 36. The chain is then used to pull the PT 36 out of the reactor core (i.e., to pull the PT 36 out longitudinally through the bores in the tube sheets 18 and the end shields 64, so that the PT 36 is entirely removed from the reactor core). In some embodiments, only the PT 36 is pulled, thus leaving the CT 32 behind to be pulled separately into the segmenting unit 118.

As noted above, the feed unit 114 may further include a feeder assembly (e.g., such as that disclosed in U.S. Patent No. 6,523,466). The feeder assembly may include additional fingers or other structures that grip an exterior surface 126 (FIG. 3) of the CT 32 and/or an exterior surface 127 of the PT 36. The feeder assembly may thus work in conjunction with the retraction unit assembly to move and feed the CT 32 and/or PT 36 into the segmenting unit 118. In some embodiments the feed unit 114 moves the CT 32 and the PT 36 together simultaneously toward the segmenting unit 118 (i.e., the PT 36 still being disposed within the CT 32), so that both tubes may be segmented simultaneously. In other embodiments, the feed unit 114 moves the CT 32 and the PT 36 separately, such that only one of the tubes is segmented at any time.

The volume reduction system 110 may include any of a number and type of feed units to move the CTs 32 and/or the PTs 36 to the segmenting unit 118. Thus, while feed units having retraction plugs, fingers, and chains are described above, other embodiments include feed units having different structures, including but not limited to clamps, suction elements, conveyors, guides, etc., or any other structures that grip inside and/or outside surfaces of the CTs 32 and/or PTs 36 and move the CTs 32 and/or PTs 36 to the segmenting unit 118.

With reference to FIG. 4, the segmenting unit 118 cuts and segments the CTs 32 and/or PTs 36. The segmenting unit 118 may be located anywhere in proximity of the feed unit 114, such that the feed unit 114 may quickly deliver the CTs 32 and/or PTs 36 to the segmenting unit 118 for cutting. In some embodiments, the segmenting unit 118 is disposed within a portion of the feed unit 114 itself (e.g., between a retraction unit assembly and a feeder assembly like those described above). Other embodiments include different locations for the segmenting unit 118.

With continued reference to FIG. 4, the segmenting unit 118 includes at least one cutting element 130. The cutting element 130 may be any element or elements shaped and sized and made of a material strong enough to cut through and segment the CTs 32 and/or PTs 36 (e.g., to simultaneously cut through both a CT 32 and PT 36, one being positioned within the other). In some embodiments, the cutting element 130 is a sharp metal blade that moves along a direction transverse to the longitudinal direction of the CTs 32 and PTs 36, so as to radially slice through the CTs and/or PTs 36. In other embodiments, the cutting element 130 may slice through the CTs 32 and/or PTs 36 at a different angle (e.g., at 45 degrees, 60 degrees, etc.). In some embodiments, the cutting element 130 includes multiple blades that are moved down to cut and slice through the CTs 32 and/or PTs 36. In yet other embodiments, the cutting element 130 includes one or more rotating circular blades, band saw (or band saw-like) blades, scissor blades, and the like. In some embodiments the cutting and slicing of the CTs 32 and/or PTs 36 is additionally or alternatively performed with shearing, punching, etc.

In the illustrated embodiment the cutting element 130 is operated by a drive element 134 (e.g. a motor), which itself is coupled to a controller 138. The controller 138 controls the drive element 134 so that the cutting element 130 cuts the CT 32 and/or PT 36 into two, three, four, five, six, or more segmented pieces as desired. In some embodiments, the CT 32 and/or PT 36 is moved longitudinally underneath or otherwise past the cutting element 130 via the feed unit 114 (or via another conveyance structure) at varying speeds (e.g., via control from the controller 138 or other controller). For example, the CT 32 and/or PT 36 may be decelerated prior to activation of the drive element 34, such that the CT 32 and/or PT 36 is held stationary when the cutting element 130 moves and cuts through the CT 32 and/or PT 36, and the CT 32 and/or PT 36 is then accelerated again. In some embodiments, a gripping structure or structures (e.g., clamps, fingers, etc.) may be used to hold a portion or portions of the CT 32 and/or PT 36 stationary during each cut with the cutting element 130. In yet other embodiments, the CT 32 and/or PT 36 instead may be held stationary while the cutting element 130 itself is moved longitudinally alongside the CT 32 and/or PT 36 in between the successive cuts (e.g., by moving along a rail or other guide structure on the segmenting unit 118, prior to be activated and cutting through the CT 32 and/or PT 36).

When the cutting element 130 cuts through a CT 32 and/or PT 36, the resulting segmented piece falls off into a shredder unit 142 (e.g., via gravity and/or via a guide surface or surfaces that guide the CT 32 and/or PT 36 into the shredder unit 142). FIG. 5 illustrates both a perspective and cross-sectional view of the shredder unit 142. As noted above, in some embodiments both the CT 32 and the PT 36 are moved together into the segmenting unit 118 (i.e., the PT 36 still being disposed within the CT 32). Thus, when the cutting element 130 is activated, the cutting element 130 cuts through both the CT 32 and through the PT 36, such that segmented pieces of both tubes fall into the shredder unit 142, in some cases still with the segmented portion of the PT 36 within the CT 32.

The segmented pieces may be of any particular length. For example, in some embodiments the segmented pieces are less than 2 meters, less than 1 meter, less than 0.5 meters, or less than 0.25 meters in length. Other embodiments include different values and ranges. In some embodiments, the controller 138 causes the cutting element 130 to cut segmented pieces of different lengths at different times, or to cut more quickly or more slowly, depending upon whether the CTs 32 and/or PTs 36 are entering the segmenting unit 118, are leaving the segmenting unit 118, or are otherwise at various positions moving through the segmenting unit 118. In some embodiments the controller 138 causes the cutting element 130 to change the size of the cuts, or to slow down or speed up, depending on whether the shredder unit 142 has capacity at any given time for additional segmented pieces. For example, the shredder unit 142 may provide a signal to the controller 138 that the shredder unit 142 is starting to fill too quickly and is close to overflowing or to holding an undesirably large volume of material being processed (e.g., based on one or more sensors that monitor conditions of the shredder unit 142), thus causing the controller 138 to send a signal to the cutting element 130 (and/or the feed unit 114) to slow the cutting and/or movement of the CTs 32 and/or PTs 36 through the segmenting unit 118. In contrast, the shredder unit 142 may provide a signal to the controller 138 that the shredder unit 142 has capacity for more segmented pieces (e.g., based on one or more sensors that monitor conditions of the shredder unit 142), thus causing the controller 138 to send a signal to the cutting element 130 (and/or the feed unit 114) to speed up the cutting and/or movement of the CTs 32 and/or PTs 36 through the segmenting unit 118.

With reference to FIG. 5, the shredder unit 142 includes shredding elements 146. The shredding elements 146 may be any elements shaped and sized and made of a material strong enough to grasp, pull, and shred the segmented pieces of the CTs 32 and PTs 36. In the illustrated embodiment, the shredding elements 146 are rotating elements secured to or integral with axles that define rotational axes 154 about which the shredding elements 146 rotate, as described in greater detail below. At least some of the shredding elements 146 include a projection or projections 150 sized and shaped to grasp onto segmented pieces of the CTs 32 and PTs 36. The projections 150 may have any shapes, including triangular, square, trapezoidal, etc. In the illustrated embodiment, some of the projections 150 are formed by two half-circles that are radially offset from one another, thereby forming two projections 150 that are 180 degrees apart and that each generally have a fin shape. Some of the shredding elements 146 include projections of a first shape, whereas other shredding elements 146 include projections 150 of a different shape. Other embodiments include various other types, numbers, and arrangements of projections 150.

With continued reference to FIG. 5, in the illustrated embodiment the shredding elements 146 are arranged in four separate rows, each row having its own separate rotational axis 154 about which a plurality of the shredding elements 146 rotate. Each of the four axes 154 are parallel to one another, but in the illustrated embodiment two of the four axes 154 are offset laterally from the other two axes 154, such that the axes 154 form four corners of a trapezoid, by way of example. This arrangement creates a receiving area 158 within which the segmented pieces may initially fall and enter before being grasped by one or more of the projections 150. With continued reference to FIG. 5, in some embodiments the shredding elements 146 are also staggered relative to one another across the rows, such that the rows of the shredding elements 146 mesh with one another. In some embodiments, one or more rows of shredding elements 146 rotate in a first direction (e.g., clockwise), whereas one or more other rows of shredding elements 146 rotate in an opposite direction (e.g., counter-clockwise). Other shredder units 142 include different numbers and arrangements of shredding elements 146 and rows of shredding elements 146 than that illustrated. For example, in some embodiments more or fewer than four rows of shredding elements 146 are provided.

With continued reference to FIG. 5, shredded material from the shredder unit 142 falls into a waste flask 162 (e.g., an existing waste flask used commonly with a CANDU^{™}-type reactor, or other waste flask). In some embodiments, the shredded material (waste) falls through an interface chute or other opening at a bottom of the shredder unit 142. Also, in some embodiments the waste flask 162 is bolted to the floor or other structure within the reactor vault during collection of the shredded material. When the waste flask 162 is full, the waste flask 162 can be unbolted, moved (e.g., with a drive mechanism), and then stored in a shielded location, due to the radioactive nature of the CTs 32 and/or PTs 36 therein. In some embodiments the waste material in the waste flask 162 may be transferred to a larger flask, and/or further processed before disposal. Once the waste is removed, a new waste flask 162 may then be inserted under the shredder unit 142.

In some embodiments, which are not part of the present invention, the volume reduction system 110 does not include a segmenting unit 118. Rather, the entire CT 32 and/or PT 36 is pulled from the reactor core, and is then immediately dropped into the shredder unit 142 (e.g., via the feed unit 114). In other embodiment, the entire CT 32 and/or PT 36 can be fed into the shredder unit 142 (e.g., via the feed unit 114). The shredder unit 142 shreds the entire CT 32 and/or PT 36, and the shredded material falls into the waste flask 162.

In some embodiments, the CTs 32 and/or PTs 36 are delivered vertically along their longitudinal lengths, rather than horizontally, into the segmenting unit 118 for segmenting and shredding. For example, once a CT 32 and/or PT 36 has been withdrawn from the reactor core, the CT 32 and/or PT 36 may be re-oriented to a vertical position (e.g., rotated 90 degrees). The CT 32 and/or PT 36 may then be lowered down (or raised up, depending upon the orientation and positioning of the CT 32 and/or PT 36, and the segmenting unit 118) into the segmenting unit 118. The re-orienting and lowering may be accomplished via cranes or other suitable material-handling equipment. In such embodiments, the cutting element 130 may be operated to extend horizontally (as opposed to vertically as described above) to cut into the CT 32 and/or PT 36. The segmented pieces may then fall into the same shredder unit 142, and thereafter into the waste flask 162. In yet other embodiments, the CTs 32 and/or PTs 36, as well as the cutting element 130, may be oriented at various other angles to facilitate insertion and cutting of the CTs 32 and/or PTs 36.

### IN-REACTOR VAULT VOLUME REDUCTION

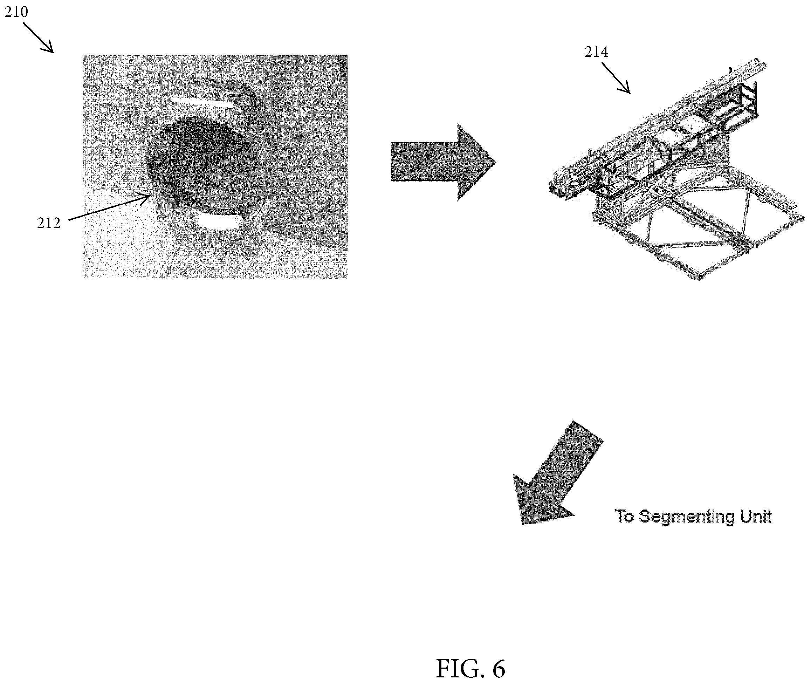

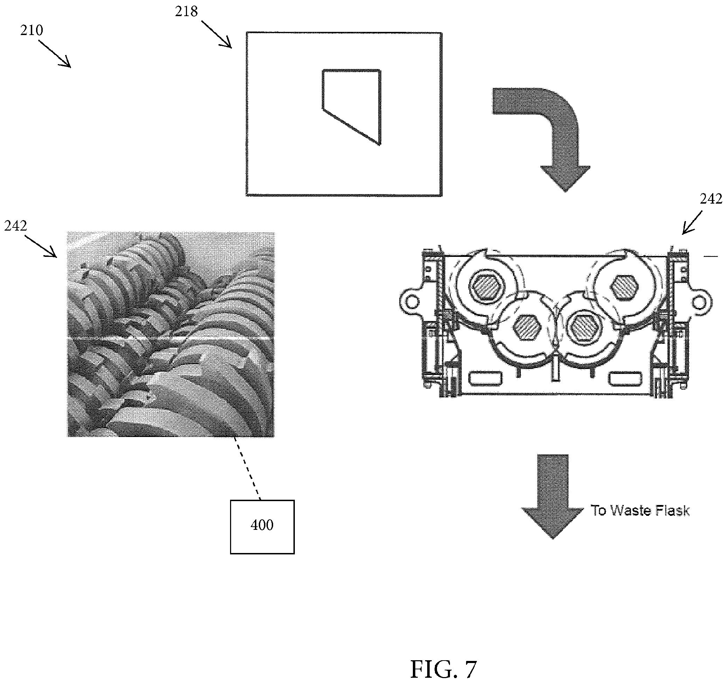

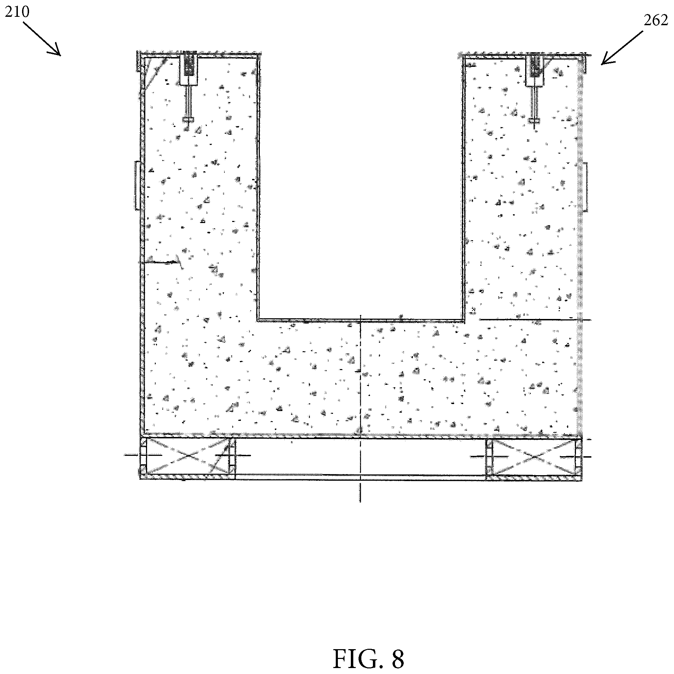

FIGS. 6-8 illustrate an in-reactor vault volume reduction system 210 and method, where at least a portion of the volume reduction system 210 is located on a work platform or other structure in a reactor vault that houses the reactor face, but is spaced apart from the reactor face (e.g., by 10 meters, 20 meters, 50 meters, 100 meters, or any other distance).

As illustrated in FIGS. 6-8, the volume reduction system 210 includes transfer cans 212 (e.g., existing transfer cans or other transfer cans). The transfer cans 212 are used to move the radioactive CTs 32 and/or PTs 36 through the reactor vault to a feed unit 214 (that can in some embodiments be identical to the feed unit 114 described above, or can be another feed unit). The transfer cans 212 may be heavy steel structures or other structures that are carried by material handling equipment (e.g., trolleys, rails, rail switching equipment, nests and cranes, etc.) within the reactor vault. In some embodiments, additional material handling equipment (e.g., a crane, etc.) is used to move the CTs 32 and/or PTs 36 from the transfer cans 212 and into the feed unit 214.

The CTs 32 and/or PTs 36 are moved via the feed unit 214 to a segmenting unit 218 (e.g., identical to the segmenting unit 118 described above, or another segmenting unit). The segmented pieces of the CTs 32 and/or PTs 36 are then moved through a shredder unit 242 (e.g., identical to the shredder unit 142 described above, or another shredder unit). The shredded material can then fall into a waste flask 262 (e.g., identical to the waste flask 162 described above, or another waste flask) through an interface chute or other opening. In some embodiments, the feed unit 214 may perform the function of reorienting the CT 32 and/or PT 36 to feed (e.g., via gravity) into the shredder unit 242 (e.g., vertically, etc.), and control the motion of the tubes into the shredder unit 242. This method may be used, for example, in an embodiment, which is not part of the present invention, where the segmenting unit 218 is not used. In some embodiments the CT 32 and/or PT 36 are gravity fed or otherwise introduced into the shredder unit 242 without use of the feed unit 214 (e.g., with other material handling equipment).

In other embodiments similar to that shown in FIGS. 6-8, the segmenting unit 218 is provided as part of the feed unit 214, so that segmented parts of the CTs 32 and/or PTs 36 are transported as described above from adjacent the reactor face to the shredder unit 242 located away from the reactor face.

### REMOTE VOLUME REDUCTION

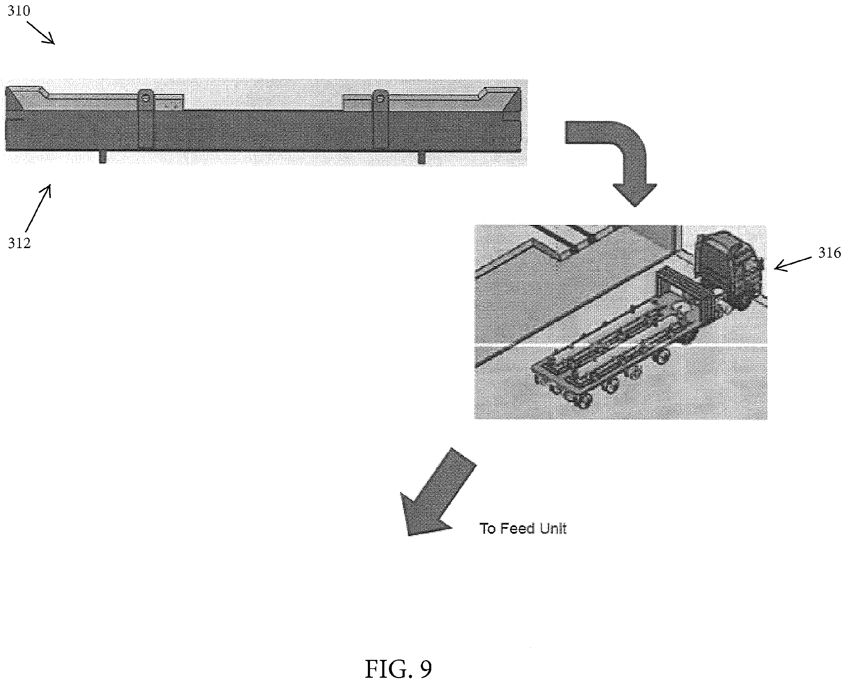

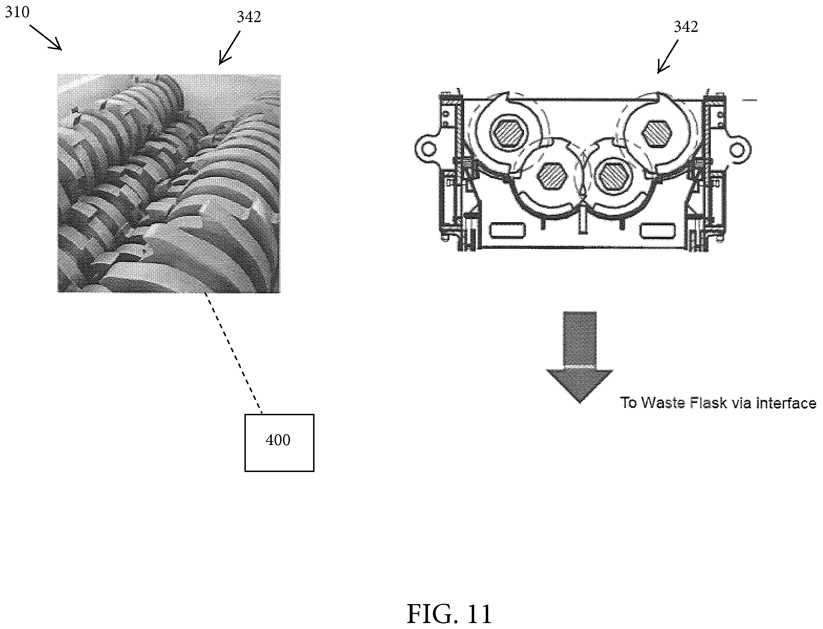

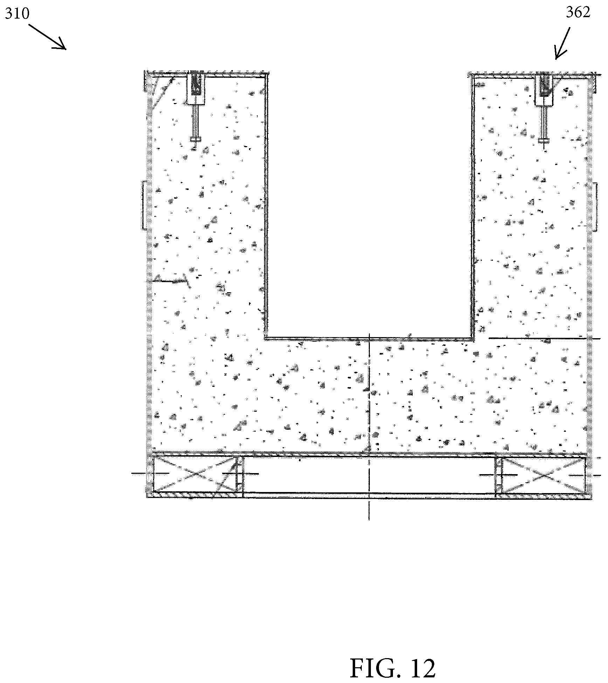

FIGS. 9-14 illustrate a remote volume reduction system 310 and method, which are not part of the present invention, where at least a portion of the volume reduction system 310 is located in an entirely separate facility from the reactor vault.

As illustrated in FIGS. 9-14, the volume reduction system 310 includes transfer flasks 312 (e.g., existing transfer flasks or other transfer flask structures) and a delivery vehicle 316 (e.g., flatbed trailer truck or other vehicle) to move the transfer flasks 312.

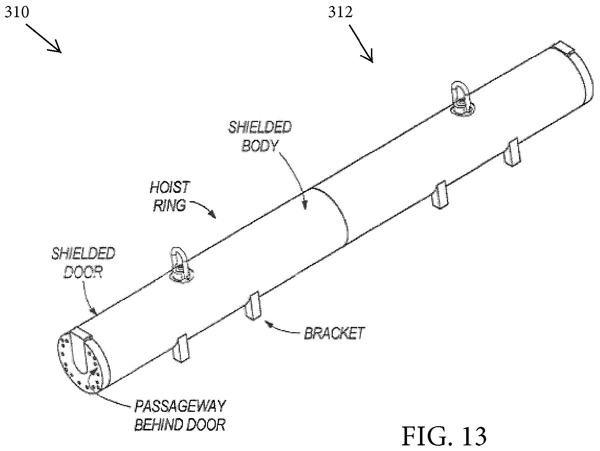

One example of a transfer flask 312 is shown in Figure 13. In the illustrated embodiment the flask 312 is sized to house for example a single CT 32, a partial length PT 36, and four garter springs 48. Ends of the flask 312 can be opened to permit loading and unloading operations. A bracket may be provided for coupling to / support on the delivery vehicle 316. Shielding permits manual hoist (e.g., with a hoist ring) and transport operations when the ends are closed. Inner surfaces permit easy cleanup, and outer surfaces decontaminate easily to permit transport. As much as possible, the design does not allow radionuclides to fall out to the environment or contaminate the outside of the transfer flask 312 when the ends are open during loading and unloading operations. Contamination control prevents the escape of radionuclides from the inside to the environment when the ends have been closed, particularly during hoisting and transport operations.

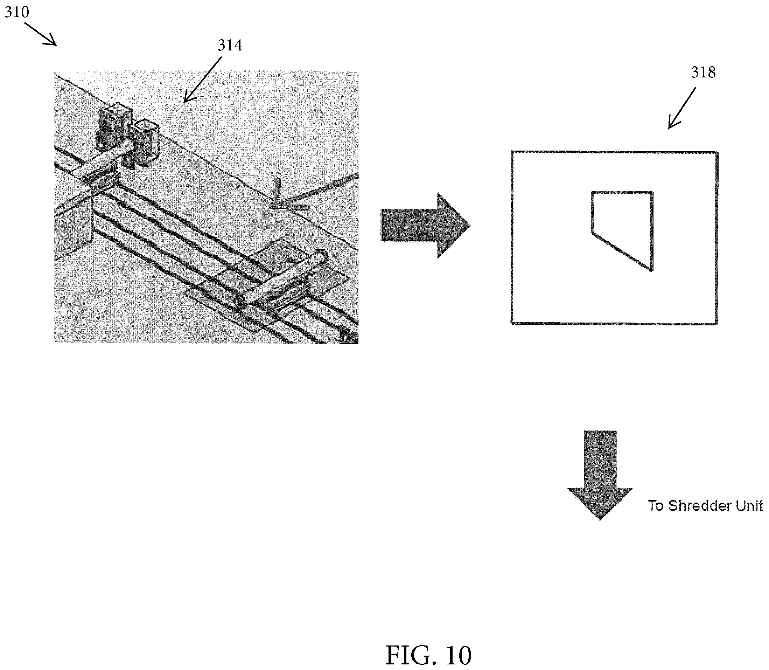

With reference to FIGS. 9 and 10, the transfer flasks 312, which contain the radioactive CTs 32 and/or PTs 36, are loaded onto the delivery vehicle 316. The delivery vehicle 316 then moves the transfer flasks 312 to the separate facility, and to a feed unit 314 (e.g., identical to the feed unit 114 described above, or another other feed unit) located in the separate facility. The transfer flask 312 may be a heavy steel structure or other structure that is carried by the delivery vehicle 316. In some embodiments, additional material handling equipment (e.g., trolleys, rails, rail switching equipment, nests and cranes, etc.) are used in the separate facility to move the CTs 32 and/or PTs 36 from the transfer flasks 312 and into the feed unit 314.

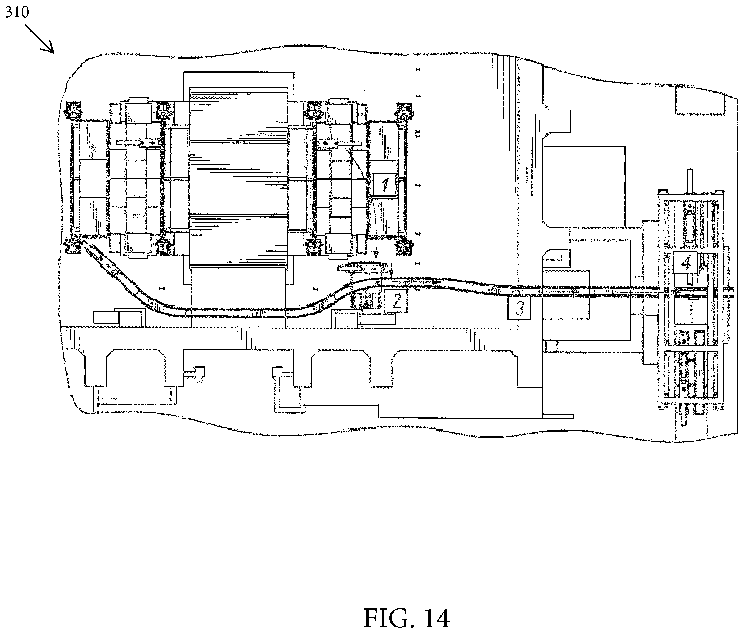

With reference to FIG. 14, in some embodiments, which are not part of the present invnetion, the following steps occur during transport to the separate facility: (1) The delivery vehicle 316 (e.g., flatbed truck) from the processing facility containing empty transfer flasks 312 will enter a truck loading area in the reactor and park. (2) The doors on a weather enclosure will be closed so that the entire truck is protected from the elements. The cover for the flatbed will be rolled back and the empty transfer flasks 312 on flatbed nests will be unsecured for hoisting. (3) Using the truck gantry, an empty transfer flask 312 will be hoisted and moved from the flatbed nest to a first buffer nest. (4) A trolley with a full transfer flask 312 from the reactor will arrive in the truck loading area.

The full transfer flask 312 on the trolley will then be loaded onto a second buffer nest. The empty transfer flask 312 will be loaded from the first buffer nest onto the trolley and sent back to the reactor. The full transfer flask 312 on the second buffer nest will be loaded and secured onto the flatbed nest. When the flatbed nest is full of full transfer flasks 312, the cover on the flatbed will be closed and the truck will leave for the separate facility. The truck will arrive at the separate facility and the full transfer flasks 312 will be removed and empty transfer flasks 312 will be loaded.

With reference to FIGS. 10, 11 and 12, inside the separate facility, the CTs 32 and/or PTs 36 are removed from the transfer flasks 312 and moved via the feed unit 314 to a segmenting unit 318 (e.g., identical to the segmenting unit 118 described above, or another segmenting unit). The segmented pieces of the CTs 32 and/or PTs 36 are then moved through a shredder unit 342 (e.g., identical to the shredder unit 142 described above, or another shredder unit). The shredded material then falls into a waste flask 362 (e.g., identical to the waste flask 162 described above, or another waste flask). In some embodiments, which are not part of the present invention, the feed unit 314 may perform the function of reorienting the CT 32 and/or PT 36 to feed (e.g., via gravity) into the shredder unit 342 (e.g., vertically, etc.), and control the motion of the tubes into the shredder unit 342. This method may be used in an embodiment, which is not part of the present invention, where the segmenting unit 318 is not used. In some embodiments, which are not part of the present invention, the CT 32 and/or PT 36 are gravity fed or otherwise introduced into the shredder unit 342 without use of the feed unit 314 (e.g., with other material handling equipment).

### FIRE SUPPRESSION

With reference to FIGS. 5, 7, and 11, in some embodiments the volume reduction systems 110, 210, 310 further include a fire suppression system 400 (illustrated schematically). The fire suppression system 400 may be used to extinguish or assist in extinguishing a fire that results during use of the volume reduction systems 110, 210, 310. In these and other embodiments, the fire suppression system 400 may be used to create an inert environment to prevent ignition of material in the volume reduction system 110, 210, 310. The fire suppression system 400 may include, for example, a nozzle or nozzles that emit gas, liquid (e.g., water), powder, or other fire-retardant materials. While nozzles are described, some embodiments include other material-emitting structures. The nozzles may be located throughout the volume reduction systems 110, 210, 310. For example, in some embodiments the fire suppression systems 400 may include nozzles directly adjacent the shredding elements 146, 246, 346, in the event that shredding of the CTs 32 and/or PTs 36 results in a spark or ignition. The nozzles may spray fire-retardant material onto the shredding elements 146, 246, 346 or onto the segmented pieces of CT 32 and/or PT 36. In some embodiments one or more nozzles may be located within or adjacent the waste flasks 162, 262, 362. Other embodiments may include different locations for the nozzles. In some embodiments the fire suppression system 400 may include a warning signal (e.g., audio and/or visual) when a spark or fire is detected. In some embodiments the fire suppression system 400 may include one or more cameras, or sensors (e.g., smoke detecting sensors or heat detecting sensors), for detecting a spark or fire, and a controller (e.g., controller 138 or another controller) that is in communication with the cameras or sensors, as well as with the nozzles or other material-emitting structures, to control operation of the material-emitting structures.

While the volume reduction systems 110, 210, 310 and the fire suppression systems 400 are described above in the context of a volume reduction for CTs 32 and PTs 36, in yet other embodiments the volume reduction systems 110, 210, 310 and/or the fire suppression systems 400 may be used in conjunction with other reactor components. For example, in some embodiments other portions of the fuel channel assembly 28 may additionally or alternatively be delivered via the feed unit 114, 214, 314 to the segmenting unit 118, 218, 218, where the components are segmented and delivered to the shredder unit 142, 242, 342 for shredding. Thus, the systems described above are not limited solely to CTs 32 and PTs 36.

It should also be noted that the embodiments described above and illustrated in the accompanying figures are presented by way of example only and are not intended as a limitation upon the concepts and principles of the present invention. As such, it will be appreciated by one having ordinary skill in the art that various changes in the elements and their configuration and arrangement are possible without departing from the scope of the present invention as set forth in the appended claims.

## Claims

1. A volume reduction system (110, 210) for reducing a volume of nuclear reactor components, the volume reduction system being provided, when in use, within a vault of a nuclear reactor, and comprising:
a feed unit (114, 214) configured to receive a component from a nuclear reactor, wherein the component includes a radioactive tube (32, 36), and wherein the feed unit (114, 214) is configured to grip an inside and/or outside surface of the radioactive tube (32, 36) and move the radioactive tube (32, 36) to a segmenting unit (118, 218) located in proximity to the feed unit;
the segmenting unit (118, 218) configured to receive the radioactive tube (32, 36) from the feed unit (114, 214), the segmenting unit (118, 218) including a cutting element (130) that segments the radioactive tube (32, 36) into segmented pieces; and
a shredder unit (142, 242) configured to receive the segmented pieces of the radioactive tube (32, 36) and shred the segmented pieces of the radioactive tube (32, 36);
wherein the shredder unit (142, 242) includes a plurality of shredding elements (146, 246), wherein the shredding elements (146, 246) are shaped and sized and made of material strong enough to grasp, pull, and shred the segmented pieces of the radioactive tube (32, 36).

2. The volume reduction system (110, 210) of claim 1, wherein the radioactive tube is a pressure tube (36).

3. The volume reduction system (110, 210) of either of claims 1 and 2, wherein the feed unit (114, 214) includes a gripping structure to grip a surface of the radioactive tube (32, 36);
optionally wherein the gripping structure includes at least one finger that extends radially and presses against the interior surface of the radioactive tube (32, 36).

4. The volume reduction system (110, 210) of claim 3, wherein the feed unit (114, 214) includes a retraction unit having a retraction plug, wherein the retraction plug includes the at least one finger, and wherein the feed unit (114, 214) further includes a feeder assembly (54) having at least a further finger that grips an exterior surface of the radioactive tube (32, 36).

5. The volume reduction system (110, 210) of any of claims 1 to 4, wherein the radioactive tube (32, 36) is a first tube, wherein the cutting element (130) is shaped and sized and made of a material strong enough to simultaneously cut through and segment both the first tube as well as a second tube disposed within the first tube.

6. The volume reduction system (110, 210) of either of claims 1 or 2, wherein the cutting element (130) is a metal blade.

7. The volume reduction system (110, 210) of either of claims 1 and 2, wherein the cutting element (130) is configured to move along a direction that is transverse to a longitudinal direction of the radioactive tube (32, 36), so as to radially cut through and segment the radioactive tube (32, 36);
wherein the segmenting unit (118, 218) includes a drive element coupled to the cutting element (130), and a controller coupled to the drive element (134), wherein the controller (138) is configured to control the drive element (134) so that the cutting element (130) cuts and segments the radioactive tube (32, 36) into at least two pieces;
and wherein the feed unit (114, 214) is configured to slow movement of the radioactive tube (32, 36) prior to the radioactive tube (32, 36) being segmented by the segmenting unit (118, 218).

8. The volume reduction system (118, 218) of either of claims 1 and 2,
wherein each of the shredding elements (146, 246) includes a projection (150); and
wherein a first one of the shredding elements (146, 246) includes a first projection having a first shape, and wherein a second one of the shredding elements (146, 246) includes a second projection having a second shape, wherein the first shape is different than the second shape.

9. The volume reduction system (110, 210) of claim 8, wherein a first one of the shredding elements (146, 246) rotates about a first axis, and a second one of the shredding elements (146, 246) rotates about a second axis, wherein the first axis is offset relative to the second axis.

10. The volume reduction system (110, 210) of either of claims 8 and 9, wherein the shredding elements (146, 246) are positioned on four separate axes, wherein the two of the four axes are laterally offset from the other two axes, such that the four axes form four corners of a trapezoid;
and wherein a first one of the shredding elements (146, 246) rotates in a first direction, and a second one of the shredding elements (146, 246) rotates in a second direction, wherein the first direction is different than the second direction.

11. The volume reduction system (110, 210) of any of the preceding claims, further comprising a fire suppression system (400), wherein the fire suppression system (400) includes a nozzle disposed adjacent the shredder unit (142, 242) to emit fire-retardant material.

12. A method for reducing, within the vault of a nuclear reactor, the volume of a nuclear reactor component, said method comprising:
removing a component from a nuclear reactor, wherein the component includes a radioactive tube (32, 36);
gripping an inside and/or outside surface of the component with a feed unit (114, 214);
moving the component with the feed unit (114, 214) to a segmenting unit (118, 218) located in proximity to the feed unit (114, 214);
cutting and segmenting the component into segmented pieces with a cutting element (130) in the segmenting unit (118, 218);
and
shredding the component with a shredding unit (142, 242), wherein the shredding unit (142, 242) shreds the segmented pieces.

13. The method of claim 12, wherein the component includes a radioactive pressure tube (36).

14. The method of either of claims 12 or 13, wherein
the step of cutting and segmenting includes moving a metal blade to cut through the component,
optionally wherein the step of cutting and segmenting includes decelerating the component prior to cutting the component with the metal blade;
wherein the step of shredding the segmented pieces includes rotating a plurality of shredding elements (146, 246) about a plurality of offset axes to grasp and pull and shred the segmented pieces.

15. The method of any of claims 12 to 14, wherein
the component includes two tubes, wherein one of the tubes is disposed within the other tube;
both of the two tubes are moved with the feed unit to the segmenting unit (118, 218); and
the two tubes are simultaneously cut and segmented into segmented pieces with the cutting element (130) in the segmenting unit (118, 218).

## Patentansprüche

1. Volumenreduktionssystem (110, 210) zum Reduzieren eines Volumens von Kernreaktorkomponenten, wobei das Volumenreduktionssystem, wenn in Verwendung, innerhalb eines Gewölbes eines Kernreaktors bereitgestellt wird und umfasst:
eine Zuführeinheit (114, 214), die dazu konfiguriert ist, eine Komponente aus einem Kernreaktor aufzunehmen, wobei die Komponente ein radioaktives Rohr (32, 36) beinhaltet und wobei die Zuführeinheit (114, 214) dazu konfiguriert ist, eine Innen- und/oder Außenoberfläche des radioaktiven Rohrs (32, 36) zu greifen und das radioaktive Rohr (32, 36) zu einer Segmentiereinheit (118, 218) zu bewegen, die sich in der Nähe der Zuführeinheit befindet;
wobei die Segmentiereinheit (118, 218) dazu konfiguriert ist, das radioaktive Rohr (32, 36) von der Zuführeinheit (114, 214) aufzunehmen, wobei die Segmentiereinheit (118, 218) ein Schneidelement (130) beinhaltet, das das radioaktive Rohr (32, 36) in segmentierte Stücke segmentiert; und
eine Zerkleinerungsmaschineneinheit (142, 242), die dazu konfiguriert ist, die segmentierten Stücke des radioaktiven Rohrs (32, 36) aufzunehmen und die segmentierten Stücke des radioaktiven Rohrs (32, 36) zu zerkleinern;
wobei die Zerkleinerungsmaschineneinheit (142, 242) eine Mehrzahl von Zerkleinerungselementen (146, 246) beinhaltet, wobei die Zerkleinerungselemente (146, 246) geformt und dimensioniert sind und aus einem Material hergestellt sind, das stark genug ist, um die segmentierten Stücke des radioaktiven Rohrs (32, 36) zu greifen, zu ziehen und zu zerkleinern.

2. Volumenreduktionssystem (110, 210) nach Anspruch 1, wobei das radioaktive Rohr ein Druckrohr (36) ist.

3. Volumenreduktionssystem (110, 210) nach entweder Anspruch 1 oder 2,
wobei die Greifstruktur wenigstens einen Finger beinhaltet, der sich radial erstreckt und gegen die innere Oberfläche des radioaktiven Rohrs (32, 36) drückt.

4. Volumenreduktionssystem (110, 210) nach Anspruch 3, wobei die Zuführeinheit (114, 214) eine Rückzugseinheit mit einem Rückzugsstopfen beinhaltet, wobei der Rückzugsstopfen den wenigstens einen Finger beinhaltet und wobei die Zuführeinheit (114, 214) ferner eine Zuführvorrichtungsbaugruppe (54) mit wenigstens einem weiteren Finger beinhaltet, der eine äußere Oberfläche des radioaktiven Rohrs (32, 36) greift.

5. Volumenreduktionssystem (110, 210) nach einem der Ansprüche 1 bis 4, wobei das radioaktive Rohr (32, 36) ein erstes Rohr ist, wobei das Schneidelement (130) geformt und dimensioniert ist und aus einem Material hergestellt ist, das stark genug ist, um sowohl das erste Rohr als auch ein innerhalb des ersten Rohrs angeordnetes zweites Rohr gleichzeitig durchzuschneiden und zu segmentieren.

6. Volumenreduktionssystem (110, 210) nach entweder Anspruch 1 oder 2, wobei das Schneidelement (130) eine Metallklinge ist.

7. Volumenreduktionssystem (110, 210) nach entweder Anspruch 1 oder 2, wobei das Schneidelement (130) dazu konfiguriert ist, sich entlang einer Richtung zu bewegen, die quer zu einer Längsrichtung des radioaktiven Rohrs (32, 36) verläuft, um das radioaktive Rohr (32, 36) radial zu durchschneiden und zu segmentieren;
wobei die Segmentiereinheit (118, 218) ein mit dem Schneidelement gekoppeltes Element (130) und eine mit dem Antriebselement (134) gekoppelte Steuervorrichtung beinhaltet, wobei die Steuervorrichtung (138) dazu konfiguriert ist, das Antriebselement (134) derart zu steuern, dass das Schneidelement (130) das radioaktive Rohr (32, 36) in wenigstens zwei Stücke schneidet und segmentiert;
und wobei die Zuführeinheit (114, 214) dazu konfiguriert ist, die Bewegung des radioaktiven Rohrs (32, 36) zu verlangsamen, bevor das radioaktive Rohr (32, 36) durch die Segmentiereinheit (118, 218) segmentiert wird.

8. Volumenreduktionssystem (118, 218) nach entweder Anspruch 1 oder 2,
wobei jedes der Zerkleinerungselemente (146, 246) einen Vorsprung (150) beinhaltet; und wobei ein erstes der Zerkleinerungselemente (146, 246) einen ersten Vorsprung mit einer ersten Form beinhaltet, und wobei ein zweites der Zerkleinerungselemente (146, 246) einen zweiten Vorsprung mit einer zweiten Form beinhaltet, wobei sich die erste Form von der zweiten Form unterscheidet.

9. Volumenreduktionssystem (110, 210) nach Anspruch 8, wobei sich ein erstes der Zerkleinerungselemente (146, 246) um eine erste Achse dreht und sich ein zweites der Zerkleinerungselemente (146, 246) um eine zweite Achse dreht, wobei die erste Achse relativ zu der zweiten Achse versetzt ist.

10. Volumenreduktionssystem (110, 210) nach entweder Anspruch 8 oder 9, wobei die Zerkleinerungselemente (146, 246) auf vier getrennten Achsen positioniert sind, wobei zwei der vier Achsen gegenüber den anderen zwei Achsen seitlich versetzt sind, sodass die vier Achsen vier Ecken eines Trapezes ausbilden;
und wobei sich ein erstes der Zerkleinerungselemente (146, 246) in einer ersten Richtung dreht und sich ein zweites der Zerkleinerungselemente (146, 246) in einer zweiten Richtung dreht, wobei sich die erste Richtung von der zweiten Richtung unterscheidet.

11. Volumenreduktionssystem (110, 210) nach einem der vorstehenden Ansprüche, ferner umfassend ein Brandbekämpfungssystem (400), wobei das Brandbekämpfungssystem (400) eine Düse beinhaltet, die benachbart zu der Zerkleinerungsvorrichtungseinheit (142, 242) angeordnet ist, um feuerhemmendes Material auszustoßen.

12. Verfahren zum Reduzieren des Volumens einer Kernreaktorkomponente innerhalb des Gewölbes eines Kernreaktors, wobei das Verfahren umfasst:
Entfernen einer Komponente aus einem Kernreaktor, wobei die Komponente ein radioaktives Rohr (32, 36) beinhaltet;
Greifen einer Innen- und/oder Außenoberfläche der Komponente mit einer Zuführeinheit (114, 214);
Bewegen der Komponente mit der Zuführeinheit (114, 214) zu einer Segmentiereinheit (118, 218), die sich in der Nähe der Zuführeinheit (114, 214) befindet;
Schneiden und Segmentieren der Komponente in segmentierte Stücke mit einem Schneidelement (130) in der Segmentiereinheit (118, 218); und
Zerkleinern der Komponente mit einer Zerkleinerungseinheit (142, 242), wobei die Zerkleinerungseinheit (142, 242) die segmentierten Stücke zerkleinert.

13. Verfahren nach Anspruch 12, wobei die Komponente ein radioaktives Druckrohr (36) beinhaltet.

14. Verfahren nach entweder Anspruch 12 oder 13, wobei
der Schritt des Schneidens und Segmentierens das Bewegen einer Metallklinge beinhaltet, um die Komponente durchzuschneiden,
optional wobei der Schritt des Schneidens und Segmentierens das Verlangsamen der Komponente beinhaltet, bevor die Komponente mit der Metallklinge geschnitten wird;
wobei der Schritt des Zerkleinerns der segmentierten Stücke das Drehen einer Mehrzahl von Zerkleinerungselementen (146, 246) um eine Mehrzahl von versetzten Achsen beinhaltet, um die segmentierten Stücke zu greifen, zu ziehen und zu zerkleinern.

15. Verfahren nach einem der Ansprüche 12 bis 14, wobei
die Komponente zwei Rohre beinhaltet, wobei eines der Rohre innerhalb des anderen Rohrs angeordnet ist;
beide der zwei Rohre mit der Zuführeinheit zu der Segmentiereinheit (118, 218) bewegt werden; und
die zwei Rohre gleichzeitig mit dem Schneidelement (130) in der Segmentiereinheit (118, 218) geschnitten und in segmentierte Stücke segmentiert werden.

## Revendications

1. Système de réduction de volume (110, 210) pour réduire le volume de composants de réacteur nucléaire, le système de réduction de volume étant prévu, à l'usage, à l'intérieur d'une enceinte d'un réacteur nucléaire, et comprenant :
une unité de fourniture (114, 214) conçue pour recevoir un composant provenant d'un réacteur nucléaire, le composant comprenant un tube radioactif (32, 36), et l'unité de fourniture (114, 214) étant conçue pour saisir une surface intérieure et/ou extérieure du tube radioactif (32, 36) et déplacer le tube radioactif (32, 36) vers une unité de segmentation (118, 218) située à proximité de l'unité de fourniture,
l'unité de segmentation (118, 218) conçue pour recevoir le tube radioactif (32, 36) provenant de l'unité de fourniture (114, 214), l'unité de segmentation (118, 218) comprenant un élément de coupe (130) qui segmente le tube radioactif (32, 36) en morceaux segmentés, et
une unité de broyage (142, 242) conçue pour recevoir les morceaux segmentés du tube radioactif (32, 36) et broyer les morceaux segmentés du tube radioactif (32, 36) ;
ladite unité de broyage (142, 242) comprenant une pluralité d'éléments de broyage (146, 246), les éléments de broyage (146, 246) étant façonnés, dimensionnés et fabriqués dans un matériau suffisamment résistant pour saisir, tirer et broyer les morceaux segmentés du tube radioactif (32, 36).

2. Système de réduction de volume (110, 210) selon la revendication 1, dans lequel le tube radioactif est un tube de force (36).

3. Système de réduction de volume (110, 210) selon l'une quelconque des revendications 1 et 2, dans lequel la structure de préhension comprend au moins une portion saillante qui s'étend radialement et appuie contre la surface intérieure du tube radioactif (32, 36).

4. Système de réduction de volume (110, 210) selon la revendication 3, dans lequel l'unité de fourniture (114, 214) comprend une unité de rétraction ayant un bouchon de rétraction, le bouchon de rétraction comprenant l'au moins une portion saillante, et l'unité de fourniture (114, 214) comprenant en outre un ensemble de fourniture (54) ayant au moins une autre portion saillante qui saisit une surface extérieure du tube radioactif (32, 36).

5. Système de réduction de volume (110, 210) selon l'une quelconque des revendications 1 à 4, dans lequel le tube radioactif (32, 36) est un premier tube, l'élément de coupe (130) étant façonné, dimensionné et fabriqué dans un matériau suffisamment résistant pour couper et segmenter simultanément à la fois le premier tube et un deuxième tube disposé à l'intérieur du premier tube.

6. Système de réduction de volume (110, 210) selon l'une quelconque des revendications 1 et 2, dans lequel l'élément de coupe (130) est une lame métallique.

7. Système de réduction de volume (110, 210) selon l'une quelconque des revendications 1 et 2, dans lequel l'élément de coupe (130) est conçu pour se déplacer dans une direction transversale à la direction longitudinale du tube radioactif (32, 36), de façon à couper radialement et à segmenter le tube radioactif (32, 36),
l'unité de segmentation (118, 218) comprenant un élément d'entraînement couplé à l'élément de coupe (130), et un dispositif de commande couplé à l'élément d'entraînement (134), le dispositif de commande (138) étant conçu pour commander l'élément d'entraînement (134) de façon que l'élément de coupe (130) coupe et segmente le tube radioactif (32, 36) en au moins deux morceaux,
et l'unité de fourniture (114, 214) étant conçue pour ralentir le déplacement du tube radioactif (32, 36) avant que celui-ci ne soit segmenté par l'unité de segmentation (118, 218).

8. Système de réduction de volume (118, 218) selon l'une quelconque des revendications 1 et 2,
dans lequel chacun des éléments de broyage (146, 246) comprend une saillie (150), et
dans lequel un premier élément de broyage (146, 246) comprend une première saillie ayant une première forme, et un deuxième élément de broyage (146, 246) comprend une deuxième saillie ayant une deuxième forme, la première forme étant différente de la deuxième forme.

9. Système de réduction de volume (110, 210) selon la revendication 8, dans lequel un premier élément parmi les éléments de broyage (146, 246) tourne sur un premier axe et un deuxième élément parmi les éléments de broyage (146, 246) tourne sur un deuxième axe, le premier axe étant décalé par rapport au deuxième axe.

10. Système de réduction de volume (110, 210) selon l'une quelconque des revendications 8 et 9, dans lequel les éléments de broyage (146, 246) sont positionnés sur quatre axes distincts, deux des quatre axes étant décalés latéralement par rapport aux deux autres axes, de façon que les quatre axes forment les quatre coins d'un trapèze,
et dans lequel un premier élément parmi les éléments de broyage (146, 246) tourne dans une première direction et un deuxième élément parmi les éléments de broyage (146, 246) tourne dans une deuxième direction, la première direction étant différente de la deuxième direction.

11. Système de réduction de volume (110, 210) selon l'une quelconque des revendications précédentes, comprenant en outre un système d'extinction d'incendie (400), le système d'extinction d'incendie (400) comprenant une buse disposée à proximité de l'unité de broyage (142, 242) pour émettre un matériau ignifuge.

12. Procédé de réduction, à l'intérieur de l'enceinte d'un réacteur nucléaire, du volume d'un composant de réacteur nucléaire, ledit procédé comprenant :
le retrait d'un composant d'un réacteur nucléaire, le composant comprenant un tube radioactif (32, 36),
la préhension d'une surface intérieure et/ou extérieure du composant au moyen d'une unité de fourniture (114, 214),
le déplacement du composant au moyen de l'unité de fourniture (114, 214) vers une unité de segmentation (118, 218) située à proximité de l'unité de fourniture (114, 214),
la découpe et la segmentation du composant en morceaux segmentés au moyen d'un élément de découpe (130) dans l'unité de segmentation (118, 218), et
le broyage du composant au moyen d'une unité de broyage (142, 242), l'unité de broyage (142, 242) broyant les morceaux segmentés.

13. Procédé selon la revendication 12, dans lequel le composant comprend un tube de force radioactif (36).

14. Procédé selon l'une quelconque des revendications 12 et 13, dans lequel
l'étape de découpe et de segmentation comprend le déplacement d'une lame métallique pour découper le composant,
l'étape de découpage et de segmentation comprenant éventuellement le ralentissement du composant avant de le découper au moyen de la lame métallique,
l'étape consistant à broyer les morceaux segmentés comprenant la rotation d'une pluralité d'éléments de broyage (146, 246) sur une pluralité d'axes décalés afin de saisir, tirer et broyer les morceaux segmentés.

15. Procédé selon l'une quelconque des revendications 12 à 14, dans lequel
le composant comprend deux tubes, un des tubes étant disposé à l'intérieur de l'autre tube,
les deux tubes sont déplacés au moyen de l'unité de fourniture vers l'unité de segmentation (118, 218), et
les deux tubes sont simultanément coupés et segmentés en morceaux segmentés au moyen de l'élément de coupe (130) dans l'unité de segmentation (118, 218).
